# EUROPÄISCHE PATENTSCHRIFT

(11) **EP 2 147 259 B1**
(45) Veröffentlichungstag und Bekanntmachung des Hinweises auf die Patenterteilung: **09.02.2011**
(21) Anmeldenummer: 08714313.7
(22) Anmeldetag: 28.03.2008
(51) Int. Cl.: F24J 2/05, F24J 2/12, F24J 2/14

(54) **AUFBLASBARER SONNENKOLLEKTOR**
INFLATABLE SOLAR COLLECTOR
COLLECTEUR SOLAIRE GONFLABLE

(30) Priorität: 30.03.2007 AT 5122007
(43) Veröffentlichungstag der Anmeldung: 27.01.2010
(73) Patentinhaber: Heliovis AG, 1040 Wien (AT)
(72) Erfinder: HÖFLER, Johannes, 1019 Wien (AT)
(74) Vertreter: Gassner, Birgitta
(86) Internationale Anmeldenummer: PCT/AT2008/000117
(87) Internationale Veröffentlichungsnummer: WO 2008/119094

(56) Entgegenhaltungen:
- WO-A-2008/120943
- FR-A- 2 362 347
- FR-A- 2 568 991
- GB-A- 2 104 644
- US-A- 4 136 671
- US-A1- 2004 055 594

## Beschreibung

Die Erfindung bezieht sich auf einen aufblasbaren Sonnenkollektor, mit einer zumindest teilweise durchsichtigen, mindestens in zwei Kammern unterteilten Hülle, wobei die Kammern durch eine einseitig verspiegelte Reflektormembran separiert und unabhängig voneinander mit einem Gas beaufschlagbar sind, sowie mit wenigstens einem der Spiegelseite jeder Reflektormembran gegenüberliegenden Absorber.

Ein derartiger, kugelförmig aufblasbarer Sonnenkollektor, der zur terrestrischen Energiegewinnung eingesetzt werden kann, ist durch einen Forschungsbericht bekannt geworden. Das Prinzip aller derartiger Sonnenkollektoren beruht darauf, dass die Sonnenstrahlen von der Reflektormembran gebündelt auf den Absorber gelenkt und von diesem energetisch umgesetzt werden. Durch unterschiedliche Druckbeaufschlagung der Kammern wird die Reflektormembran so gekrümmt, dass die Fokussierung der Strahlen stets beim Absorber erfolgt. Als Absorber können mediendurchströmte Röhren, Photovoltaikelemente etc. dienen. Nachteilig bei diesen Sonnenkollektoren ist allerdings die Kugelform, da diese aufwändig in der Fertigung ist und einer komplizierten zweiachsigen Nachführung bedarf. Nachteilig ist weiters die Verwendung als kugelförmige Heliostate, da diese es wegen der Abschattungsproblematik von Solarturmkraftwerken nicht gestattet, mehrere derartige Sonnenkollektoren relativ eng nebeneinander zu positionieren. Die Flächenausbeute der Energiegewinnung ist daher nicht optimal.

Ziel der Erfindung ist es, die oben genannten Nachteile zu beseitigen, also die Fertigung und die Nachführung zu vereinfachen und die Flächenausbeute für die Energiegewinnung zu steigern.

Ein aufblasbarer Sonnenkollektor, welcher den nächstkommenden Stand der Technik abbildet, zeigt die Patentschrift US-A-2004/0055594.

Die Erfindung stellt sich als ein aufblasbarer Sonnenkollektor mit den Merkmalen des Anspruchs 1 der.

Die Zylinderform des erfindungsgemäßen Sonnenkollektors gestattet die Anordnung mehrerer derartiger Kollektoren unmittelbar nebeneinander, sodass die Flächenausbeute der Energiegewinnung ein Maximum beträgt. Dementsprechend ist jede Reflektormembran über die gesamte Länge des Sonnenkollektors erstreckt. In einem derartigen zylindrischen Schlauch können durchaus mehrere Reflektormembranen angeordnet sein, die entweder mit einem einzigen Absorber oder mit einem jeweils ihnen zugeordneten Absorber zusammenwirken. Entsprechend der Längsausdehnung sind diese Absorber auf mindestens einer Fokuslinie angeordnet. Die Anschlüsse der Gasleitungen in die einzelnen Kammern sowie die Anschlüsse der Absorber an die weiteren Energieverwertungsgeräte entsprechen dem Stand der Technik.

Eine bevorzugte Ausführungsform des erfindungsgemäßen aufblasbaren Sonnenkollektors zeichnet sich dadurch aus, dass auf der der Spiegelseite abgekehrten Seite jeder Reflektormembran quer zur Längsausdehnung des Schlauches Drähte odgl. in definierten Abständen gespannt sind und jeder Absorber jeweils im wesentlichen in der Mitte zwischen zwei Drähten angeordnet ist. Durch diese Ausgestaltung wird erreicht, dass sich bei druckbeaufschlagtem Sonnenkollektor, indem auf der der Spiegelseite abgekehrten Seite der Reflektormembran ein geringerer Druck erzeugt wird als oberhalb, die Membran nicht zylindrisch gekrümmt wird, sondern, durch die Drähte abgestützt, die Form aneinander gereihter Kugelkalottenschalenoberflächen annimmt. Dementsprechend ist jeweils oberhalb der Mitte der einzelnen Abschnitte ein Absorber anzuordnen, wodurch eine intensive Bündelung der eingestrahlten Energie erzielt wird.

Es hat sich als zweckmäßig erweisen, wenn auf der der Spiegelseite abgekehrten Seite jeder Reflektormembran mindestens eine Ballastkammer mit änderbarem Ballast vorgesehen ist. Dies ist insbesondere bei erfindungsgemäßen Sonnenkollektoren für terrestrische Energiegewinnung günstig, als durch Befüllen oder Entleeren der Ballastkammer bzw. Ballastkammern einerseits eine Lagestabilisierung, anderseits eine Ausrichtung zur Sonne erzielt werden kann. Bei am Boden verankerten, jedoch in die Luft ragenden bzw. schwebenden aufblasbaren Sonnenkollektoren ist es günstig, wenn jede Ballastkammer in Längsrichtung des Schlauches in Teilkammern unterteilt ist, die durch Leitungen verbunden sind. Durch unterschiedliches Befüllen oder Entleeren der Teilkammern kann eine kontinuierliche Ausrichtung im Bezug auf die Sonne erreicht werden.

Anstelle von füll- bzw. entleerbaren Ballastkammern kann auf der der Spiegelseite abgekehrten Seite jeder Reflektormembran auch ein lageveränderbarer Ballast untergebracht sein.

Aufgrund des geringen Gewichts und der Eigensteifheit kann der Sonnenkollektor an (mindestens) einem Ende an (mindestens) einem Mast befestigt werden um die Fläche darunter zu verschatten/ von Schnee oder Regen frei zu halten oder um als Lärmschutz zu dienen. Bei einer schrägen Montage kann der der Sonne zugeneigte Querschnitt im Jahresmittel optimal eingestellt werden (Die Neigung ist vom geographischen Breitengrad abhängig). Der Sonnenkollektor kann auch an einem Schwenkmast gleitend/ beweglich befestigt sein und so zweiachsig mit nur einem Motor der Sonne nachgeführt werden. Alternativ kann statt dem Mast auch ein Auftriebsgas für die schräge Stellung sorgen. In diesem Fall kann über die variable Länge des Abspannseils eine zweiachsige Nachführung realisiert werden.

Der Sonnenkollektor kann auch vertikal aufgestellt, wie ein Mast abgespannt und betrieben werden. In dieser Betriebsart kann er besonders in den Wintermonaten bei flach einfallender Strahlung viel Sonnenlicht einfangen, es kann kein Schnee auf der Oberfläche liegen bleiben, er braucht nur wenig Bodenfläche und die Rückseite kann z.B. für Reklamezwecke benutzt werden. Eine weitere Einsatzmöglichkeit wäre als Mast für unterschiedliche Einsatzbereiche (z.B. Mobilfunkbetreiber).

Falls die Reflektormembran aus homogenem Material besteht, erfolgt ihre Konkavkrümmung im Verwendungszustand im wesentlichen entsprechend einer Kettenlinie bzw. einer Kreislinie. Da dies für eine optimale Fokussierung nicht immer ausreicht, ist es empfehlenswert, wenn jede Reflektormembran quer zur ihrer Längsausdehnung unterschiedlich durchbiegbar und im Verwendungszustand im wesentlichen parabel- bzw. paraboloidförmig gebogen ist.

Um bei terrestrischen Anwendung des erfindungsgemäßen aufblasbaren Sonnenkollektors einerseits eine Bodenverankerung, anderseits eine einfache Nachführung bezüglich des Sonnenstandes erzielen zu können, hat es sich als vorteilhaft erwiesen, wenn an im wesentlichen diametral gegenüberliegenden Außenseiten des Schlauches vorzugsweise einander kreuzende Verankerungsbänder befestigt sind. Werden derartige gegenläufige und in bevorzugter Weise auch einander kreuzende Bänder mit ihren freien Enden am Boden verankert, so ist einerseits eine Befestigung gewährleistet, anderseits die Möglichkeit einer Drehung des Sonnenkollektors entsprechend dem Sonnengang möglich.

Um die vorgenannte Drehbewegung bei terrestrisch anwendbaren erfindungsgemäßen Sonnenkollektoren zu begünstigen, können an der jedem Absorber gegenüber liegenden Außenseite des Schlauches Auflagerrollen odgl. vorgesehen sein.

Beim schwimmenden Einsatz genügt ev. die Befestigung an den beiden Schlauchenden. Die Nachführung kann entweder über die oben erwähnte(n) Ballasttechnik(en) oder die an den Drehpunkten montierten Motoren oä erfolgen. Eine zweiachsige Nachführung ist mittels Drehung des Schlauches um die vertikale Achse möglich.

Zum Einsatz des erfindungsgemäßen aufblasbaren Sonnekollektors in der Luft ist es günstig, wenn der Schlauch mit einem Auftriebsgas gefüllt wird. Diesfalls kann er ohne zusätzliche Hilfsmittel über dem Boden schweben. Um einen derartig mit Auftriebsgas gefüllten Sonnenkollektor jeweils dem Sonnenstand nachführen zu können, hat es sich als vorteilhaft erwiesen, wenn in den Schlauch wenigstens eine an eine Spannungsquelle anschließbare Leiterschleife eingebettet ist. Mit Hilfe einer derartigen Leiterschleife, bzw. bei mehreren Windungen mit einer Spule, kann ein Magnetfeld erzeugt werden, das durch Interaktion mit dem Erdmagnetfeld eine Positionierung des Sonnenkollektors ermöglicht.

Die Erfindung wird im folgenden anhand zweier in der Zeichnung schematisch dargestellter Ausführungsbeispiele näher erläutert.

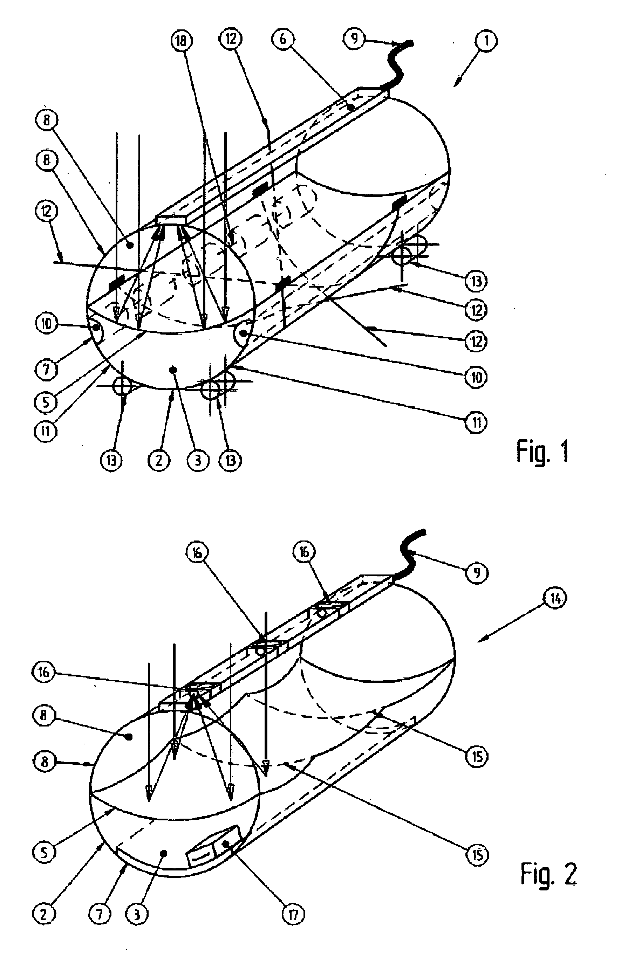

Der aufblasbare Sonnenkollektor 1 gemäß Fig. 1 weist als Hülle einen zylindrischen Schlauch 2 auf, der zumindest oberhalb einer den Schlauch 2 in zwei Kammern 3, 4 unterteilenden Reflektormembran 5 durchsichtig ist. Im dargestellten Beispiel ist die Reflektormembran 5 an der Oberseite verspiegelt und erstreckt sich im wesentlichen diametral entlang des gesamten Schlauches 2. Oberhalb der Reflektormembran 5 ist ein längserstreckter Absorber 6 etwa im Bereich der Mantelfläche des Schlauches 2 angeordnet. Es handelt sich dabei beispielsweise um eine mediendurchströmte Röhre. Die Kammern 3, 4 sowie der Absorber 6 sind an entsprechende Anschlussleitungen 7, 8, 9 angeschlossen. Unterhalb der Reflektormembran sind zwei Ballastkammern 10 angeordnet, die über Leitungen 11 je nach Bedarf befüllt oder entleert werden können. Diese können - wie in Fig. 1 ersichtlich - noch in Teilkammern 18 unterteilt sein, die durch Leitungen verbunden sind. An diametral gegenüberliegenden Außenseiten des Schlauches 2 sind Verankerungsbänder 12 befestigt, die - wie ersichtlich - gekreuzt geführt sind. Mit diesen Bändern kann der erfindungsgemäße aufblasbare Sonnenkollektor am Boden befestigt werden, wobei eine Drehbewegung um die Achse des zylindrischen Schlauches 2 möglich bleibt. Zur Abstützung des erfindungsgemäßen aufblasbaren Sonnenkollektors 1 sind außerdem noch Auflagerrollen 13 vorgesehen.

Beim Einsatz des erfindungsgemäßen aufblasbaren Sonnenkollektors zur terrestrischen Energiegewinnung wird dieser in günstiger Position zum Lauf der Sonne am Boden mittels der Verankerungsbänder 12 befestigt und mit Hilfe der Ballastkammern 10 und unter Abstützung auf den Auflagerrollen 13 dem Sonnenlauf nachgeführt. Die von der Sonne ausgehenden Strahlen werden von der Reflektormembran 5 reflektiert und auf den Absorber 6 fokussiert, wodurch das in ihm strömende Medium stark erhitzt und in weiterer Folge zur Energiegewinnung ausgenützt werden kann.

Anstelle einer einzelnen Reflektormembran 5 und den damit gebildeten beiden Kammern 3, 4 könnten auch zwei oder mehrere Reflektormembranen untergebracht sein, wobei jeweils im Verwendungszustand die Kammer unterhalb mit geringerem Druck aufgefüllt werden muss als die Kammer darüber, um die gewünschte Wölbung der Reflektormembran herbeizuführen. Will man eine der Parabelform nächstkommende Krümmung der Reflektormembran 5 erzielen, so muss deren Durchbiegbarkeit quer zur Längsausdehnung unterschiedlich sein.

Bei dem in Fig. 2 schematisch dargestellten aufblasbaren Sonnenkollektor 14 sind gleiche Merkmale mit denselben Bezugszeichen wie in Fig. 1 bezeichnet. Zum Unterschied von Fig. 1 sind unterhalb der Reflektormembran 5 in definierten Abständen Drähte odgl. 15 in Querrichtung gespannt. Im Verwendungszustand des Sonnenkollektors 14 ist dann die Reflektormembran 5 nicht so wie in Fig. 1 dargestellt bloß zylindrisch gekrümmt, sondern in einzelne, annähernd kugel- oder paraboloidkalottenförmig gewölbt. Um Faltenbildungen etc. zu vermeiden kann die Reflektormembran zwischen den gespannten Drähten an den Rändern ausgebaucht sein. Ebenso können geeignete Zwickel vorgesehen sein. Dementsprechend sind etwa mittig oberhalb dieser einzelnen Abschnitte separierte Absorber 16 auf einer gemeinsamen Fokuslinie angeordnet, bei denen es sich beispielsweise um Photovoltaikelemente handeln kann. Unterhalb der Reflektormembran 5 ist anstelle der befüllbaren Ballastkammern 10 ein lageveränderbarer Ballast 17 untergebracht, dem dieselben Funktionen zukommen, wie den Ballastkammern 10. Alle übrigen Merkmale, die zu Verankerungszwecken dienen, können ebenfalls vorgesehen sein, sind aber der Einfachheit halber nicht angedeutet. Die Funktionsweise des Sonnenkollektors 14 entspricht jener des Sonnenkollektors 1, jedoch lediglich mit dem Unterschied, dass die Fokussierung jeweils annähernd punktförmig und nicht linienförmig erfolgt.

Außer den dargestellten Ausführungsformen für terrestrische Energiegewinnung, die mit herkömmlichen Adaptierungen durchaus auch für den Einsatz als schwimmende Sonnenkollektoren geeignet sind, ist es auch möglich, Sonnenkollektoren mit einem Auftriebsgas zu befüllen, sodass sie nach Art eines Zeppelins in der Luft schweben können. Die hiezu erforderlichen Anschlüsse und Verankerungen sind von herkömmlicher Art. Zur Positionierung kann man sich aber im Einklang mit der gegenständlichen Erfindung des erdmagnetischen Feldes bedienen, wenn man den Schlauch mit einer Spule umgibt bzw. eine Spule in diesem einbettet, die bei Stromdurchgang ein Magnetfeld erzeugt, das mit dem Erdmagnet feld in Wechselwirkung tritt.

## Patentansprüche

1. Aufblasbarer Sonnenkollektor, mit einer zumindest teilweise durchsichtigen, mindestens in zwei Kammern unterteilten Hülle, wobei die Kammern durch eine einseitig verspiegelte Reflektormembran separiert sind, sowie mit wenigstens einem der Spiegelseite der Reflektormembran gegenüberliegenden Absorber, wobei die Hülle als zylindrischer Schlauch (2) ausgebildet ist und die Reflektormembran (5) in dessen Längsausdehnung erstreckt ist sowie der bzw. die Absorber (6; 16) längs mindestens einer in dessen Längsausdehnungsrichtung verlaufenden Fokuslinie im Bereich der Mantelfläche des Schlauches (2) angeordnet ist bzw. sind, **dadurch gekennzeichnet, dass** die Kammern unabhängig voneinander mit einem Gas beaufschlagbar sind.

2. Aufblasbarer Sonnenkollektor nach Anspruch 1, **dadurch gekennzeichnet, dass** auf der der Spiegelseite abgekehrten Seite der Reflektorenmembran (5) quer zur Längsausdehnung des Schlauches Drähte (15) .in definierten Abständen gespannt sind und jeder Absorber (16) jeweils im wesentlichen in der Mitte zwischen zwei Drähten (15) angeordnet ist.

3. Aufblasbarer Sonnenkollektor nach Anspruch 1 oder 2, **dadurch gekennzeichnet, dass** auf der der Spiegelseite abgekehrten Seite der Reflektormembran (5) mindestens eine Ballastkammer (10) mit änderbarem Ballast vorgesehen ist.

4. Aufblasbarer Sonnenkollektor nach Anspruch 3, **dadurch gekennzeichnet, dass** jede Ballastkammer (10) in Längsrichtung des Schlauches (2) in Teilkammern (18) unterteilt ist, die durch Leitungen verbunden sind.

5. Aufblasbarer Sonnenkollektor nach Anspruch 1 oder 2, **dadurch gekennzeichnet, dass** auf der der Spiegelseite abgekehrten Seite der Reflektormembran (5) ein lageveränderbarer Ballast (17) untergebracht ist.

6. Aufblasbarer Sonnenkollektor nach einem der Ansprüche 1 bis 5, **dadurch gekennzeichnet, dass** die Reflektormembran (5) quer zur ihrer Längsausdehnung unter-schiedlich durchbiegbar und im Verwendungszustand im wesentlichen parabel bzw. paraboloidförmig gebogen ist.

7. Aufblasbarer Sonnenkollektor nach einem der Ansprüche 1 bis 6, **dadurch gekennzeichnet, dass** an im wesentlichen diametral gegenüberliegenden Aussenseiten des Schlauches (2) vorzugsweise einander kreuzende Verankerungsbänder (12) befestigt sind.

8. Aufblasbarer Sonnenkollektor nach einem der Ansprüche 1 bis 7, **dadurch gekennzeichnet, dass** an der jedem Absorber (6) gegenüberliegenden Außenseite des Schlauches (2) Auflagerrollen (13) vorgesehen sind.

9. Aufblasbarer Sonnenkollektor nach einem der Ansprüche 1 bis 6, **dadurch gekennzeichnet, dass** der Schlauch mit einem Auftriebsgas gefüllt ist.

10. Aufblasbarer Sonnenkollektor nach Anspruch 9, **dadurch gekennzeichnet, dass** in den Schlauch wenigstens eine an eine Spannungsquelle anschließbare Leiterschleife eingebettet ist.

## Claims

1. Inflatable solar collector with at least one partially transparent sleeve, divided into at least two chambers, whereby the chambers are separated by a reflector membrane which is reflective on one side, as well as with at least one absorber opposite the reflective side of the reflector membrane, whereby the sleeve is in the form of a cylindrical tube (2) and the reflector membrane (5) extends in its longitudinal direction and the absorber(s) (6; 16) is/are arranged longitudinally along at least one focus line in the region of the lateral surface of the cylindrical tube (2), **characterised in that** the chambers can be filled with a gas independently of each other.

2. Inflatable solar collector in accordance with claim 1, **characterised in that** on the side of the reflector membrane (5) turned away from the reflective side, wires (15) are stretched at defined distances perpendicularly to the longitudinal extent of the tube and each absorber (16) is essentially arranged centrally between two wires (15).

3. Inflatable solar collector in accordance with claim 1 or 2 **characterised in that**, at least one ballast chamber (10) with a variable ballast is provided on the side of the reflector membrane (5) turned away from the reflective side.

4. Inflatable solar collector in accordance with claim 3, **characterised in that** in the longitudinal direction of the cylindrical tube (2) each ballast chamber (10) is divided into partial chambers (18) which are connected by pipes.

5. Inflatable solar collector in accordance with claim 1 or 2, **characterised in that**, a variable position ballast (17) is accommodated on the side of the reflector membrane (5) turned away from the reflective side.

6. Inflatable solar collector in accordance with any one of claims 1 to 5, **characterised in that** perpendicularly to its longitudinal direction the reflector membrane (5) can be variously bent, and when in use is essentially curved in a parabolic or parabolic-like manner.

7. Inflatable solar collector in accordance with any one of claims 1 to 6, **characterised in that** anchoring straps (12), which preferably cross each other, are attached at essentially diametrically opposite outer sides of the cylindrical tube (2).

8. Inflatable solar collector in accordance with any one of claims 1 to 7, **characterised in that** bearing rolls (13) are provided on the outer side of the cylindrical tube (2) opposite each absorber (6).

9. Inflatable solar collector in accordance with any one of claims 1 to 6 **characterised in that** the cylindrical tube is filled with an inflation gas.

10. Inflatable solar collector in accordance with claim 9, **characterised in that** at least one conductor loop connectable to a power source is embedded in the cylindrical tube.

## Revendications

1. Capteur solaire gonflable, comprenant une enveloppe au moins partiellement transparente, subdivisée au moins en deux chambres, les chambres étant séparées par une membrane réflecteur argentée sur un côté, et au moins un absorbeur faisant face au côté miroir de la membrane réflecteur, l'enveloppe étant conçue sous forme de flexible (2) cylindrique et la membrane réflecteur (5) étant étirée dans cette extension longitudinale et le ou les absorbeurs (6 ; 16) étant disposé(s) le long d'au moins une ligne focale agencée dans sa direction d'extension longitudinale à peu près au centre de la surface d'enveloppe du flexible (2), **caractérisé en ce que** les chambres peuvent être alimentées avec un gaz indépendamment les unes des autres.

2. Capteur solaire gonflable selon la revendication 1, **caractérisé en ce que** des fils (15) sont tendus à des distances définies sur le côté, opposé au côté miroir, de la membrane réflecteur (5) transversalement à l'extension longitudinale du flexible et chaque absorbeur (16) étant disposé à chaque fois principalement au centre entre deux fils (15).

3. Capteur solaire gonflable selon la revendication 1 ou 2, **caractérisé en ce qu'**au moins une chambre ballast (10) avec un ballast variable est prévue sur le côté, opposé au côté miroir, de la membrane réflecteur (5).

4. Capteur solaire gonflable selon la revendication 3, **caractérisé en ce que** chaque chambre ballast (10) est subdivisée dans la direction longitudinale du flexible (2) en chambres partielles (18) qui sont reliées par des conduites.

5. Capteur solaire gonflable selon la revendication 1 ou 2, **caractérisé en ce qu'**un ballast (17) variable en position est logé sur le côté, opposé au côté miroir, de la membrane réflecteur (5).

6. Capteur solaire gonflable selon l'une quelconque des revendications 1 à 5, **caractérisé en ce que** la membrane réflecteur (5) peut être pliée différemment transversalement à son extension longitudinale et est courbée dans l'état d'utilisation principalement en forme de parabole ou de paraboloïde.

7. Capteur solaire gonflable selon l'une quelconque des revendications 1 à 6, **caractérisé en ce que** des bandes d'ancrage (12) se croisant de préférence sont fixées sur des côtés extérieurs, pour l'essentiel diamétralement opposés, du flexible (2).

8. Capteur solaire gonflable selon l'une quelconque des revendications 1 à 7, **caractérisé en ce que** des rouleaux d'appui (13) sont prévus sur le côté extérieur, opposé à chaque absorbeur (6), du flexible (2).

9. Capteur solaire gonflable selon l'une quelconque des revendications 1 à 6, **caractérisé en ce que** le flexible est rempli avec un gaz de sustentation.

10. Capteur solaire gonflable selon la revendication 9, **caractérisé en ce qu'**au moins une boucle conductrice pouvant être raccordée à une source de tension est noyée dans le flexible.
